# EUROPÄISCHE PATENTSCHRIFT

(11) **EP 1 972 492 B1**
(45) Veröffentlichungstag und Bekanntmachung des Hinweises auf die Patenterteilung: **14.10.2009**
(21) Anmeldenummer: 08004040.5
(22) Anmeldetag: 05.03.2008
(51) Int. Cl.: B60N 3/10

(54) **Halter für einen Getränkebehälter**
Holder for a drinks container
Support de réservoir de boissons

(30) Priorität: 23.03.2007 DE 102007013981
(43) Veröffentlichungstag der Anmeldung: 24.09.2008
(73) Patentinhaber: fischer automotive systems GmbH & Co. KG, 72160 Horb (DE)
(72) Erfinder: Bastian, Ulf-Lothar, 72285 Pfalzgrafenweiler (DE); Schäuffele, Rolf, 72184 Eutingen (DE); Hess, Alexander, 72285 Pfalzgrafenweiler (DE)

(56) Entgegenhaltungen:
- EP-A- 1 655 169
- DE-A1- 10 328 677
- DE-A1- 19 630 056
- US-A- 5 190 259

## Beschreibung

Die Erfindung betrifft einen Halter für einen Getränkebehälter mit den Merkmalen des Oberbegriffs des Anspruchs 1, der zum Einbau in ein Land-, Wasser- oder Luftfahrzeug, insbesondere in einen Kraftwagen vorgesehen ist. In dieser Anmeldung verwendete, Raumrichtungen angebende Begriffe wie Anheben, Absenken, nach oben, nach unten beziehen sich auf eine vorgesehene Einbaulage des Halters.

Halter für Getränkebehälter, die zum Einbau in eine nahezu senkrechte oder jedenfalls steil stehende Fläche wie beispielsweise eine Instrumentenkonsole eines Kraftwagens vorgesehen sind, sind in einer nahezu unüberschaubaren Vielzahl unterschiedlicher Ausführungsformen und Konstruktionen bekannt. Es sind solche Halter mit einem schubladenartig ausziehbaren Schieber bekannt, der eine oder auch mehrere Einstellöffnungen für einen oder mehrere Getränkebehälter aufweist. Solche Getränkebehälter sind beispielsweise Becher, Getränkedosen, Tassen, Flaschen etc.

Die japanische Offenlegungsschrift JP 2000 016 139 A offenbart einen derartigen Halter mit einem schubladenartig ausziehbaren Schieber, der zwei in Draufsicht U-förmige Haltebügel aufweist, die mit Schwenklagerungen um gedachte, horizontale Achsen schwenkbar im Schieber gelagert sind. Die Schwenklagerungen sind voneinander entfernt an freien Enden von Schenkeln der U-förmigen Haltebügel angeordnet, deren Schenkel einander kreuzen. Joche der Halter weisen einen Abstand voneinander auf, so dass ein Getränkebehälter zwischen sie eingestellt werden kann. Zum Halten werden die Haltebügel aus einer in dem Schieber horizontal einliegenden Grundstellung in eine angehobene Stützstellung nach oben geschwenkt, in der die Joche der beiden Haltebügel einen in den Halter eingestellten Getränkebehälter oberhalb des Schiebers an einander gegenüberliegenden Seiten bzw. Umfangsstellen stützen. Durch das Schwenken der Haltebügel nach oben in die Stützstellung bewegen sich die Joche der Haltebügel von dem ausziehbaren Schieber nach oben, so dass sie einen in den Halter eingestellten Getränkebehälter mit ausreichender Stützhöhe über dem Schieber seitlich stützen, um den Getränkebehälter kippsicher zu halten. Beim Schwenken der Haltebügel des bekannten Halters nach oben bewegen sich die Joche aufeinander zu, d. h. der lichte Abstand zwischen den Jochen verkleinert sich. Durch unterschiedlich weites Schwenken der Haltebügel nach oben ist deswegen eine Anpassung an unterschiedliche Durchmesser von Getränkebehältern möglich.

Aufgabe der Erfindung ist einen Halter für einen Getränkebehälter vorzuschlagen, der eine Verkürzung seiner Bautiefe ermöglicht.

Diese Aufgabe wird erfindungsgemäß durch die Merkmale des Anspruchs 1 gelöst. Der erfindungsgemäße Halter weist ein Halteelement auf, das mit einer Schwenklagerung aus einer abgesenkten, beispielsweise horizontalen Grundstellung in eine angehobene Stützstellung schwenkbar gelagert ist, in der er beispielsweise schräg nach oben steht. Durch das Anheben in die Stützstellung bewegt sich ein von der Schwenklagerung beabstandeter Stützbereich des Halteelements nach oben. Mit dem Stützbereich stützt das Halteelement einen in den Halter eingestellten Getränkebehälter seitlich an einer Stelle seines Umfangs oder an einem Umfangsbereich ab.

Das Halteelement des erfindungsgemäßen Halters weist ein Basisteil auf, das mit der Schwenklagerung schwenkbar gelagert ist, und einen Schieber, der mit einer Schiebeführung verschiebbar am Basisteil geführt ist. Durch die Verschiebbarkeit des Schiebers am Basisteil lässt sich das Halteelement in der Schieberichtung verlängern und verkürzen. Durch Verlängern des Halteelements lässt sich eine lichte Weite einer Einstellöffnung des Halters für einen Getränkebehälter vergrößern. Durch die Möglichkeit, durch Zusammenschieben des Schiebers und des Basisteils das Halteelement zu verkürzen, kann eine Bautiefe des erfindungsgemäßen Halters verkleinert werden. Auch besteht durch die Verschiebbarkeit des Schiebers am Basisteil des Halteelements die Möglichkeit der Anpassung des erfindungsgemäßen Halters an unterschiedliche Durchmesser von Getränkebehältern. Diese Möglichkeit kann zusätzlich oder statt der möglichen Verkürzung der Bautiefe vorhanden sein.

Der erfindungsgemäße Halter braucht nicht notwendig ausziehbar sein, er kann auch feststehend angeordnet und nach oben öffenbar sein.

In bevorzugter Ausgestaltung der Erfindung ist vorgesehen, dass der Schieber im Sinne einer Vergrößerung oder Verkleinerung eines Abstands von der Schwenklagerung des Basisteils verschiebbar geführt ist. Das bedeutet, der Schieber ist beispielsweise in radialer oder tangentialer Richtung zu einer gedachten Schwenkachse der Schwenklagerung verschiebbar.

Eine Ausgestaltung der Erfindung sieht ein Federelement vor, das den Schieber nach Überwinden einer Totpunktstellung weiter in der Richtung verschiebt, in der die Totpunktstellung überwunden worden ist. Das Federelement verschiebt den Schieber beispielsweise bis in eine Endstellung. Der Schieber weist zwei Endstellungen auf, in der Totpunktstellung befindet er sich zwischen den beiden Endstellungen. Das Federelement beaufschlagt den Schieber in beiden Richtungen jeweils weg von der Totpunktstellung. Das Federelement beaufschlagt also den Schieber nach Überwinden der Totpunktstellung in einer Richtung in seine verlängerte Stellung und nach Überwinden der Totpunktstellung in der anderen Richtung in seine verkürzte Stellung und hält das Halteelement jeweils in der verlängerten oder in der verkürzten Stellung.

Zum seitlichen Stützen eines in den Halter eingestellten Getränkebehälters kann beispielsweise ein oberer Rand eines Einbaugehäuses oder ein sonstiges feststehendes Element dienen, zwischen das das Halteelement bzw. dessen Schieber und der Getränkebehälter eingestellt wird. Eine Ausgestaltung der Erfindung sieht ein zweites Halteelement vor, das mit einer Führung aus einer abgesenkten Grundstellung in eine angehobene Stützstellung bewegbar geführt ist. In der angehobenen Stützstellung stützt das zweite Halteelement einen in den Halter eingestellten Getränkebehälter auf einer dem ersten Halteelement gegenüberliegenden Seite, so dass der eingestellte Getränkebehälter von beiden Seiten gegen Kippen gestützt ist.

Die Führung des zweiten Halteelements kann eine vertikale oder auch eine schräg nach oben verlaufende Schiebeführung sein. Eine bevorzugte Ausgestaltung der Erfindung sieht vor, dass auch die Führung des zweiten Halteelements eine Schwenklagerung ist.

Eine Weiterbildung der Erfindung sieht eine Kopplung der beiden Halteelemente vor. Die Kopplung überträgt die Bewegung eines der beiden Halteelemente auf das andere Halteelement, so dass sich beide Halteelemente gemeinsam in die Stütz- und/oder in die Grundstellungen bewegen. Dadurch braucht nur eines der beiden Halteelemente bewegt bzw. angetrieben zu werden, das andere Halteelement bewegt sich mit.

Eine Ausgestaltung der Erfindung sieht eine Kulissensteuerung für die Kopplung der beiden Halteelemente vor. Kulissensteuerungen werden auch als Kurvensteuerungen bezeichnet, sie erzeugen eine Bewegung durch Abfahren einer Kurve. Im Falle einer Kulissensteuerung bewegt sich ein beispielsweise als Kulissenstein oder Kulissenzapfen bezeichnetes Element in einer Nut oder einem Schlitz, die oder der die Bahn bilden. Durch die Form der Kurve lassen sich gewünschte Relativbewegungen der beiden Halteelemente bewirken.

Eine Ausgestaltung der Erfindung sieht vor, dass sich die Schwenklagerungen der beiden Halteelemente in Bezug auf einen in den Halter eingestellten Getränkebehälter auf der gleichen Seite des Getränkebehälters befinden. Die beiden Halteelemente schwenken also in gleicher Richtung nach oben in ihre Stützstellungen. Durch unterschiedlich große Schwenkwinkel und/oder in radialer Richtung zu den gedachten Schwenkachsen ihrer Schwenklagerungen unterschiedlich lange Halteelemente und/oder durch voneinander beabstandete gedachte Schwenkachsen ergibt sich ein Abstand zwischen den Stützbereichen der beiden Halteelemente, so dass ein Getränkebehälter zwischen die beiden Stützbereiche einstellbar ist. Die Anordnung beider Schwenklagerungen ohne oder mit geringem Abstand ihrer gedachten Schwenkachsen voneinander ermöglicht eine kompakte und platzsparende Bauform des erfindungsgemäßen Halters.

Eine Weiterbildung der Erfindung sieht vor, dass das zweite Halteelement ein Deckel ist, der in der Grundstellung den Halter abdeckt. Diese Ausgestaltung ist insbesondere vorgesehen, wenn der Halter feststehend und nicht schubladenartig ausziehbar ausgebildet ist.

Zur Anpassung an unterschiedliche Durchmesser von Getränkebehältern sieht eine Ausgestaltung vor, dass das zweite Halteelement mindestens eine Zwischenstellung zwischen der Grund- und der Stützstellung aufweist, in der es feststellbar ist oder von selbst hält. In der Zwischenstellung ist der lichte Abstand des zweiten Halteelements von dem in der Stützstellung befindlichen ersten Halteelement kleiner als in der Stützstellung des zweiten Halteelements, wodurch sich die Anpassung an unterschiedliche Durchmesser von Getränkebehältern ergibt. Diese Ausgestaltung der Erfindung ist mit einer Schiebeführung des zweiten Haltelements, die beispielsweise schräg nach oben verläuft, ebenso möglich wie mit einer Schwenklagerung des zweiten Halteelements. Das Feststellen des zweiten Halteelements in der mindestens einen Zwischenstellung kann beispielsweise mit einem federbeaufschlagten Klemmmechanismus oder einer Schraubenklemmung erfolgen. Ein selbsttätiges Halten ist mit an sich bekannten Schnappmechanismen möglich. Auch durch eine klemmende Verschiebbarkeit des Schiebers am Basisteil sind Zwischenstellungen stufenlos möglich.

Die Erfindung wird nachfolgend anhand eines in der Zeichnung dargestellten Ausführungsbeispiels näher erläutert. Es zeigen:
- Figur 1: einen erfindungsgemäßen Halter in einer geschlossenen Grundstellung;
- Figur 2: den Halter aus Figur 1 in einer teilweise geöffneten Stellung; und
- Figur 3: den Halter aus Figur 1 in einer offenen Stützstellung.

Dabei zeigen jeweils die Figuren a den Halter in perspektivischer Darstellung; die Figuren b den Halter in Seitenansicht und die Figuren c eine Einzelheitdarstellung eines Halteelements des Halters von unten.

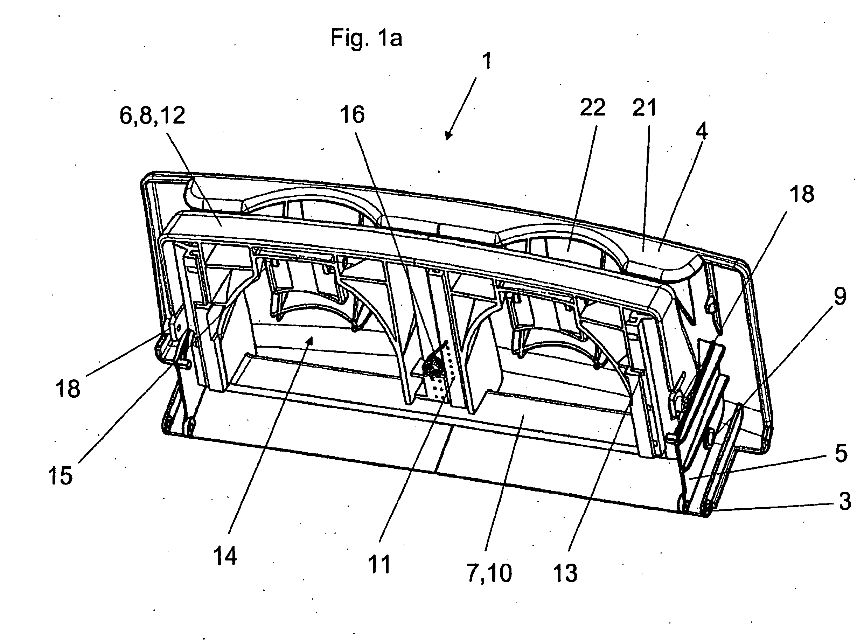

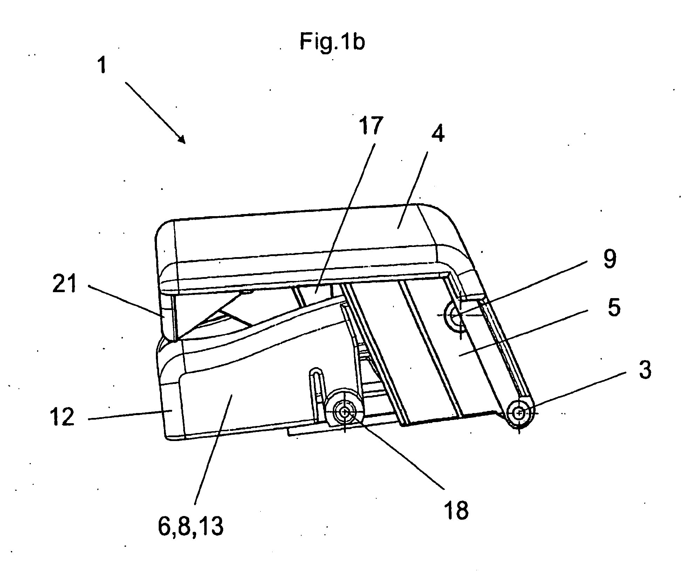

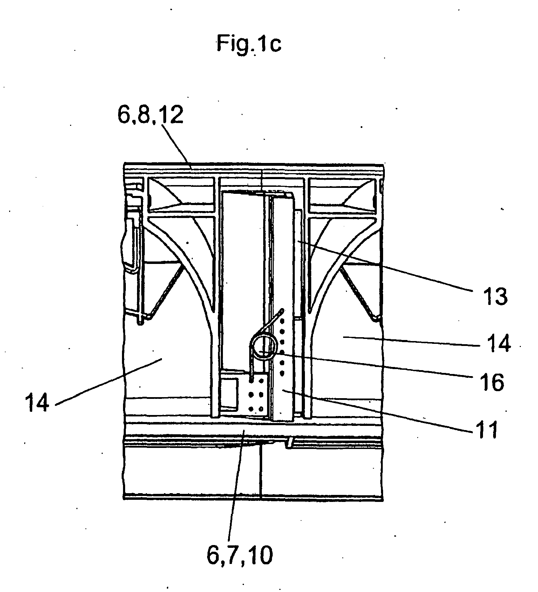

Der in der Zeichnung dargestellte, erfindungsgemäße Halter 1 weist ein flaches, oben offenes, schachtelförmiges Gehäuse 2 auf, das in Figuren 1 a, b nicht gezeichnet ist, damit die anderen Bauteile des Halters 1 sichtbar sind. Der Halter 1 ist zum Einbau in einen nicht dargestellten Kraftwagen mit in etwa horizontaler Einbaulage des Gehäuses 2 vorgesehen. Das Gehäuse 2 ist flach und in etwa doppelt so breit wie tief. Als Ausführungsbeispiel wird ein Halter 1 zum Einstellen und kippsicheren Halten von zwei nicht dargestellten Getränkebehältern beschrieben. Solche Getränkebehälter können Getränkedosen, Becher, Tassen, Flaschen oder dgl. sein.

Mit Schwenklagerungen 3 ist ein Deckel 4 schwenkbar im Gehäuse 2 gelagert. In der in Figuren 1a - c dargestellten geschlossenen Stellung befindet sich der plattenförmige Deckel 4 auf dem oben offenen Gehäuse 2 und deckt das Gehäuse 2 ab. Der Deckel 4 ist um eine gedachte, von der Schwenklagerung 3 definierten Schwenkachse vom Gehäuse 2 nach oben und zur Seite schwenkbar. Die Schwenkachse befindet sich im Bodenbereich an einer Seite des Gehäuses 2. Von dem plattenförmigen Deckel 4 stehen plattenförmige Beine 5 nach unten ab, die in das Gehäuse 2 ragen und an deren Enden sich die Schwenklagerungen 3 befinden.

Im Gehäuse 2 befindet sich ein zweiteiliges Halteelement 6, das ein Basisteil 7 und einen Schieber 8 umfasst. Das Basisteil 7 ist mit einer Schwenklagerung 9 schwenkbar an den Füßen 5 des Deckels 4 gelagert. Eine gedachte Schwenkachse weist einen Abstand von der Schwenklagerung 3 des Deckels 4 im Gehäuse 2 auf, die Schwenkachsen der Schwenklagerungen 3 des Deckels 4 und der Schwenklagerung 9 des Basisteils 7 sind parallel zueinander. Das Basisteil 7 weist eine leistenförmige Traverse 10 auf, von der drei Schiebeführungen 11 nach Art von Fingern senkrecht abstehen. Es befindet sich je eine Schiebeführung 11 an beiden Enden der Traverse 10 und die dritte Schiebeführung 11 in der Mitte der Traverse 10. Die Schiebeführungen 11 sind parallel zueinander.

An den Schiebeführungen 11 des Basisteils 7 ist der Schieber 8 in tangentialer Richtung zu den Schwenkachsen der Schwenklagerungen 3, 9 verschiebbar am Basisteil 7 des Halteelements 6 geführt. Der Schieber 8 weist eine Frontleiste 12 auf, die parallel zur Traverse 10 des Basisteils 7 verläuft. In der in Figuren 1a - c gezeigten geschlossenen Stellung befindet sich die Frontleiste 12 mit Abstand von der Traverse 10 an einer gegenüberliegenden Seite des Gehäuses 2 wie die Traverse 10. Von der Frontleiste 12 des Schiebers 8 stehen drei Finger 13 ab, die verschiebbar an oder auf den Schiebeführungen 11 des Basisteils 7 verschiebbar geführt sind. Die Finger 13 können als Bestandteil der Schiebeführungen 11 aufgefasst werden, mit denen der Schieber 8 verschiebbar am Basisteil 7 des Halteelements 6 geführt ist. Die drei Finger 13 des Schiebers 8 begrenzen zwei bogenförmige Öffnungen 14 zwischen sich, die Bestandteil von noch zu erläuternden Einstellöffnungen des Halters 1 für zwei nicht dargestellte Getränkebehälter bilden.

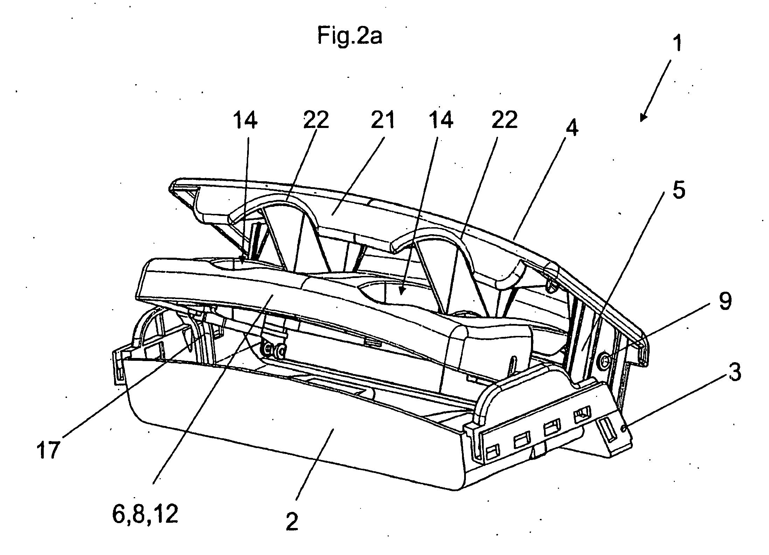

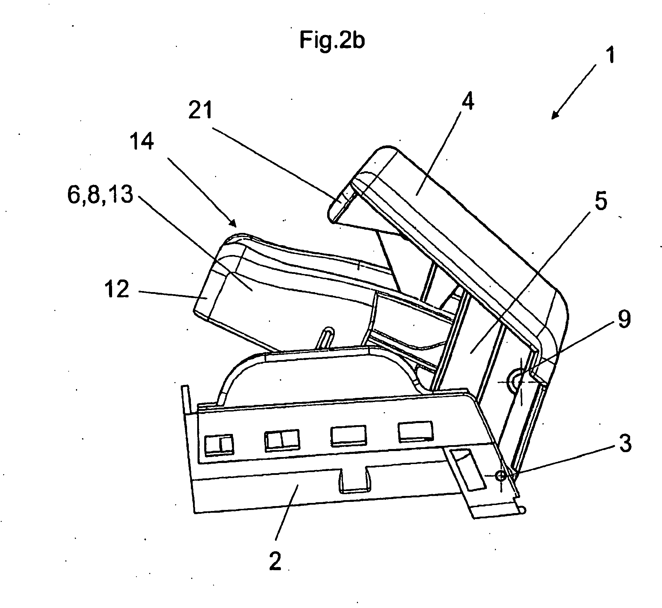

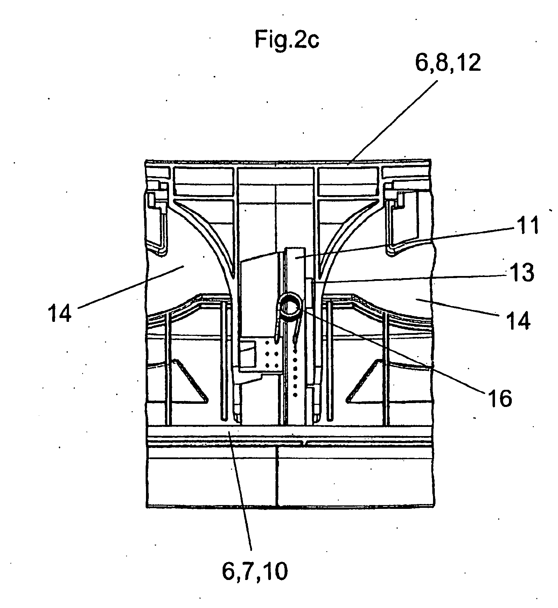

An der Unterseite des Halteelements 6 ist ein Federelement in Form einer Schenkelfeder 16 angeordnet, deren einer Schenkel in der mittleren Schiebeführung 11 des Basisteils 7 und deren anderer Schenkel am mittleren Finger 13 des Schiebers 8 eingehängt ist. Beim Verschieben des Schiebers 8 gegenüber dem Basisteil 7 nähern sich die Einhängestellen der Schenkelfeder 16 einander und entfernen sich anschließend wieder voneinander. Ihre größte Annäherung haben die Einhängestellen der Schenkelfeder 16 in der in Figuren 2a - c gezeigten Totpunktstellung. Wird diese Totpunktstellung überwunden, beaufschlagt die Schenkelfeder 16 den Schieber 8 entweder vom Basisteil 7 weg oder, wenn die Totpunktstellung in umgekehrter Richtung überwunden wird, zum Basisteil 7 hin.

An beiden Seiten weist das Gehäuse 2 je eine Kulissenbahn 17 auf, in die ein Kulissenzapfen 18 des Schiebers 8 eingreift. Die Kulissenbahn 17 verläuft zunächst senkrecht nach oben und anschließend in einem Bogen von den Schwenklagerungen 3, 9 weg. Die Kulissenbahn 17 und der in sie eingreifende Kulissenzapfen 18 bilden eine Kulissensteuerung.

Der Deckel 4 und das Basisteil 7 des Halteelements 6 weisen eine nicht sichtbare Schnappverbindung auf. Die Schnappverbindung umfasst einen punktförmigen Wulst, der seitlich nach innen von den Füßen 5 des Deckels 4 absteht und in eine komplementäre Vertiefung in den äußeren, fingerförmigen Schiebeführungen 11 des Basisteils 7 eingreift. Solange der Wulst in der Vertiefung einliegt, schwenkt das Halteelement 6 mit dem Deckel 4 mit.

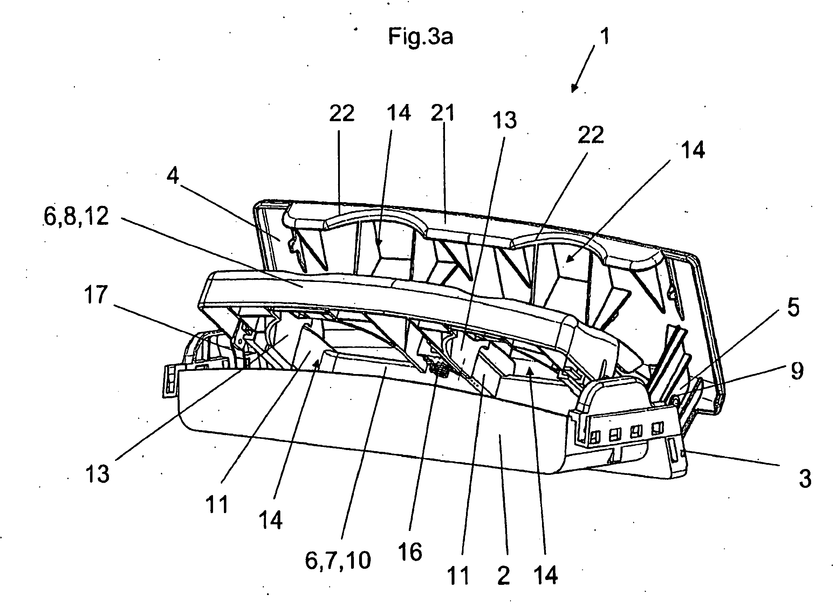

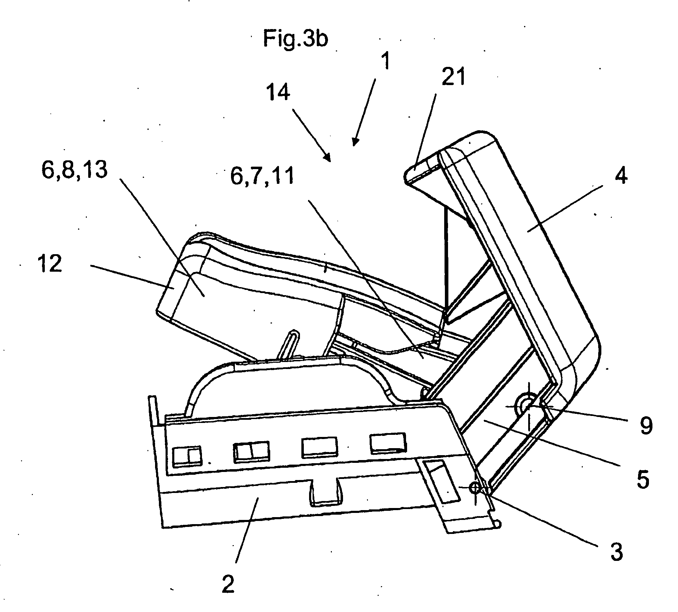

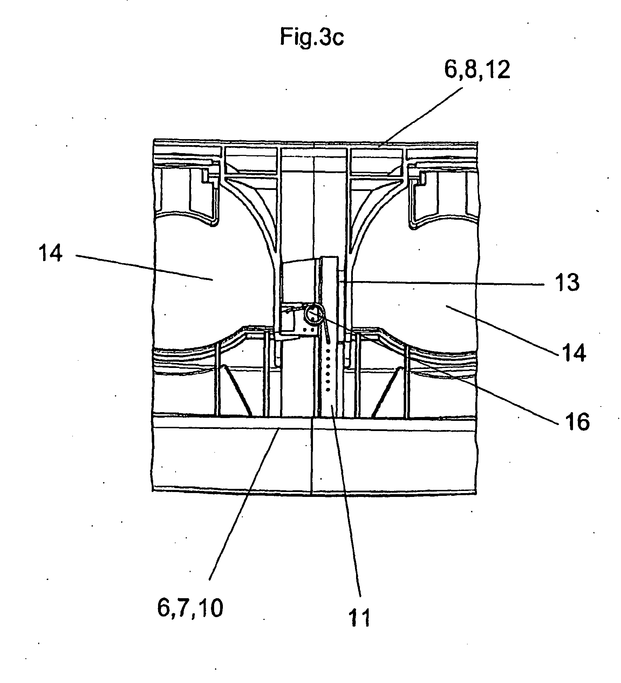

Zum Öffnen des Halters 1 wird der Deckel 4 aus der in Figuren 1a - c dargestellten geschlossenen Stellung, die auch als Grundstellung bezeichnet wird, nach oben und zur Seite in die in Figuren 3a - c dargestellte offene Stellung geschwenkt, die auch als Stützstellung bezeichnet wird. Der Deckel 4 wird also aus der liegenden Grundstellung in die schräg nach oben stehende Stützstellung angehoben.

Durch die Schnappverbindung bewegt der Deckel 4 das Halteelement 6 mit nach oben, d. h. mit dem Deckel 4 wird das Halteelement 6 aus der im Gehäuse 2 liegenden, in Figuren 1a - c dargestellten Grundstellung in die in Figuren 3a - c dargestellte, schräg nach oben stehende Stützstellung geschwenkt. Der Schwenkwinkel des Halteelements 6 ist kleiner als der des Deckels 4, so dass in den Stützstellungen ein Winkelabstand zwischen dem Deckel 4 und dem Halteelement 6 besteht.

Beim Schwenken des Halteelements 6 nach oben, also beim Anheben des Halteelements 6 in die Stützstellung, bewegen sich die Kulissenzapfen auf beiden Seiten des Schiebers 8 in den Kulissenbahnen 17 nach oben. Der Verlauf der Kulissenbahnen 17 bewirkt eine Verschiebung des Schiebers 8 am Basisteil 7 vom Basisteil 7 weg. Insgesamt verlängert sich das den Schieber 8 und das Basisteil 7 umfassende Halteelement 6 in Richtung der Schiebeführungen 11. Dadurch vergrößert sich ein Abstand der Frontleiste 12 des Schiebers 8 von einem ihr zugewandten Rand des Deckels 4. An dem der Frontleiste 12 zugewandten Rand weist der Deckel 4 eine nach unten abstehende Blende 21 auf. In der Blende 21 sind zwei bogenförmige Ausnehmungen 22 angebracht, die zusammen mit den bogenförmigen Öffnungen 14 des Schiebers 8 zwei Einstellöffnungen für nicht dargestellte, in den Halter einstellbare Getränkebehälter bilden. Durch die Verschiebung des Schiebers 8 beim Anheben in die Stützstellung vom Basisteil 7 weg vergrößert sich ein lichter Abstand zwischen den Öffnungen 14 des Schiebers 8 und den Ausnehmungen 22 der Blende 21 des Deckels 4, so dass Getränkebehälter mit größerem Durchmesser einstellbar sind. Das Halteelement 6 stützt einen bzw. zwei in den Halter 1 eingestellte Getränkebehälter auf einer Seite. Auf einer gegenüberliegenden Seite werden die eingestellten Getränkebehälter an den bogenförmigen Ausnehmungen 22 vom Deckel 4 gestützt, so dass die Behälter kippsicher im Halter 1 gehalten sind. Der Deckel 4 bildet somit ebenfalls ein Halteelement, das nachfolgend auch als zweites Halteelement 4 bezeichnet wird.

Durch die Verschiebung des Schiebers 8 beim Anheben in die Stützstellung weg vom Basisteil 7 des Halteelements 6 überwindet der Schieber 8 und die Schenkelfeder 16 die in Figuren 2a - c dargestellte Totpunktstellung. Nach Überwindung der Totpunktstellung beaufschlagt die Schenkelfeder 16 den Schieber 8 weg vom Basisteil 7. Durch den Verlauf der Kulissenbahn 17 der Kulissensteuerung 17, 18 bewirkt die Federkraft der Schenkelfeder 16 ein nach oben gerichtetes Moment, das nach Überwinden der Totpunktstellung das Halteelement 6 in die Stützstellung beaufschlagt und hält. Wird zum Schließen des Halters 1 der Deckel 4 nach unten in seine Grundstellung geschwenkt, drückt er das Halteelement 6 mit nach unten in die Grundstellung. Über die Kulissensteuerung 17, 18 wird der Schieber 8 zum Basisteil 7 des Halteelements 6 verschoben. Nach Überwinden der Totpunktstellung beaufschlagt die Schenkelfeder 16 den Schieber 8 in Richtung des Basisteils 7. Der Verlauf der Kulissenbahn 17 der Kulissensteuerung 17, 18 bewirkt ein nach unten gerichtetes Moment auf das Halteelement 6, das dieses in die Grundstellung beaufschlagt und dort hält. Da die Schnappverbindung des Deckels 4 beim Schließen am Halteelement 6 einschnappt, ist der Deckel 4 mit dem Halteelement 6 verbunden und wird über die Kulissensteuerung 17, 18 und die Schenkelfeder 16 zusammen mit dem Halteelement 6 in der Grundstellung, d. h. geschlossen gehalten.

Zum Einstellen eines Getränkebehälters mit größerem Durchmesser lässt sich der Deckel 4 über die in Figuren 3a - c dargestellte Stützstellung hinwegschwenken, wobei die Schnappeinrichtung außer Eingriff gelangt. Der lichte Abstand zwischen den bogenförmigen Ausnehmungen 22 des Deckels 4 und den Öffnungen 14 des Schiebers 8 vergrößert sich zum Einstellen von Getränkebehältern mit größerem Durchmesser.

Da sich der Deckel 4 über die in Figuren 3a - c dargestellte Stützstellung hinweg in eine weiter geöffnete Stützstellung schwenken lässt, kann die in Figuren 3a - c dargestellte Stützstellung auch als Zwischenstellung bezeichnet werden.

## Patentansprüche

1. Halter für einen Getränkebehälter, mit einem Halteelement (6), das mit einer Schwenklagerung (9) aus einer abgesenkten Grundstellung in eine angehobene Stützstellung schwenkbar geführt ist, in der das Halteelement (6) einen in den Halter (1) eingestellten Getränkebehälter auf einer Seite stützt, **dadurch gekennzeichnet, dass** das Halteelement (6) ein Basisteil (7), das mit der Schwenklagerung (9) schwenkbar gelagert ist, und einen Schieber (8), der mit einer Schiebeführung (11, 13) verschiebbar am Basisteil (7) geführt ist, aufweist.

2. Halter nach Anspruch 1, **dadurch gekennzeichnet, dass** der Schieber (8) im Sinne einer Vergrößerung oder Verkleinerung eines Abstands von der Schwenklagerung (9) des Basisteils (7) am Basisteil (7) verschiebbar geführt ist.

3. Halter nach Anspruch 1, **dadurch gekennzeichnet, dass** das Halteelement (6) ein Federelement (16) aufweist, das den Schieber (8) nach Überwinden einer Totpunktstellung in beiden Richtungen von der Totpunktstellung weg verschiebt.

4. Halter nach Anspruch 1, **dadurch gekennzeichnet, dass** der Halter (1) ein zweites Halteelement (4) aufweist, das mit einer Führung (3) aus einer abgesenkten Grundstellung in eine angehobene Stützstellung, in der es einen in den Halter (1) eingestellten Getränkebehälter auf einer dem ersten Halteelement (6) gegenüberliegenden Seite stützt, bewegbar geführt ist.

5. Halter nach Anspruch 4, **dadurch gekennzeichnet, dass** die Führung des zweiten Halteelements (4) eine Schwenklagerung (3) ist.

6. Halter nach Anspruch 4, **dadurch gekennzeichnet, dass** die beiden Halteelemente (4, 6) eine Kopplung aufweisen, die eine Bewegung des einen Haltelements (4) auf das andere Halteelement (6) überträgt, so dass sich beide Halteelemente (4, 6) gemeinsam in die Stütz- und/oder die Grundstellungen bewegen.

7. Halter nach Anspruch 1, **dadurch gekennzeichnet, dass** der Halter (1) eine Kulissensteuerung (17) für den Schieber (8) aufweist, die den Schieber (8) beim Schwenken in die Stützstellung vom Basisteil (7) weg und/oder beim Schwenken in die Grundstellung zum Basisteil (7) hin verschiebt.

8. Halter nach Anspruch 5, **dadurch gekennzeichnet, dass** sich die Schwenklagerungen (3, 9) der beiden Halteelemente (4, 6) auf der gleichen Seite eines in den Halter (1) eingestellten Getränkebehälters befinden.

9. Halter nach Anspruch 4, **dadurch gekennzeichnet, dass** das zweite Halteelement ein Deckel (4) ist, der in der Grundstellung den Halter (1) abdeckt.

10. Halter nach Anspruch 5, **dadurch gekennzeichnet, dass** das zweite Halteelement (4) mindestens eine Zwischenstellung zwischen der Grund- und der Stützstellung aufweist, in der es feststellbar ist oder von selbst hält und in der ein lichter Abstand zwischen den beiden Halteelementen (4, 6) für einen in den Halter (1) einstellbaren Getränkebehälter kleiner als in der Stützstellung des zweiten Halteelements (4) ist.

## Claims

1. Holder for a drinks container, having a holding element (6), which is guided by a pivot bearing (9) so as to be pivotable out of a lowered initial position into a raised support position in which the holding element (6) supports, on one side, a drinks container that has been inserted into the holder (1) **characterized in that** the holding element (6) has a base member (7), which is pivotally mounted by the pivot bearing (9), and a slider member (8) which is guided by a sliding guide means (11, 13) so as to be displaceable on the base member (7).

2. Holder according to claim 1, **characterized in that** the slider member (8) is guided so as to be displaceable on the base member (7) in the sense of an increase or reduction in a spacing from the pivot bearing (9) of the base member (7).

3. Holder according to claim 1, **characterized in that** the holding element (6) has a spring element (16) which displaces the slider member (8), after overcoming a dead centre position, in both directions away from the dead centre position.

4. Holder according to claim 1, **characterized in that** the holder (1) has a second holding element (4) which is guided by a guide means (3) so as to be movable out of a lowered initial position into a raised support position in which it supports, on a side opposite from the first holding element (6), a drinks container that has been inserted into the holder (1).

5. Holder according to claim 4, **characterized in that** the guide means of the second holding element (4) is a pivot bearing (3).

6. Holder according to claim 4, **characterized in that** the two holding elements (4, 6) have a coupling which transmits movement of the one holding element (4) to the other holding element (6), so that both holding elements (4,6) move together into the support and/or initial position(s).

7. Holder according to claim 1, **characterized in that** the holder (1) has a control track arrangement (17) for the slider member (8), which control track arrangement displaces the slider member (8) away from the base member (7) on pivoting into the support position and/or towards the base member (7) on pivoting into the initial position.

8. Holder according to claim 5, **characterized in that** the pivot bearings (3, 9) of the two holding elements (4, 6) are located on the same side of a drinks container that has been inserted into the holder (1).

9. Holder according to claim 4, **characterized in that** the second holding element is a lid (4) which covers the holder (1) in the initial position.

10. Holder according to claim 5, **characterized in that** the second holding element (4) has, between the initial position and the support position, at least one intermediate position in which it can be fixed or holds by itself and in which the uninterrupted space between the two holding elements (4, 6) for a drinks container insertable into the holder (1) is smaller than in the support position of the second holding element (4).

## Revendications

1. Support pour un conteneur pour boissons, muni d'un élément de retenue (6) guidé à pivotement, par un système de montage pivotant (9), d'une position de base abaissée à une position d'appui relevée dans laquelle ledit élément de retenue (6) offre un appui, d'un côté, à un conteneur pour boissons placé dans ledit support (1), **caractérisé par le fait que** l'élément de retenue (6) comprend une partie d'embase (7) montée pivotante avec le système de montage pivotant (9), et une pièce coulissante (8) guidée à coulissement, sur ladite partie d'embase (7), par un système de guidage coulissant (11, 13).

2. Support selon la revendication 1, **caractérisé par le fait que** la pièce coulissante (8) est guidée à coulissement, sur la partie d'embase (7), dans le sens d'un agrandissement ou d'une diminution d'une distance vis-à-vis du système de montage pivotant (9) de ladite partie d'embase (7).

3. Support selon la revendication 1, **caractérisé par le fait que** l'élément de retenue (6) présente un élément à ressort (16) qui, après avoir outrepassé une position de point mort, fait coulisser la pièce coulissante (8) dans les deux directions l'éloignant de ladite position de point mort.

4. Support selon la revendication 1, **caractérisé par le fait que** ledit support (1) comporte un second élément de retenue (4) guidé, à l'aide d'un guide (3), avec mobilité depuis une position de base abaissée jusqu'à une position d'appui relevée dans laquelle il offre un appui, sur un côté situé en vis-à-vis du premier élément de retenue (6), à un conteneur pour boissons placé dans ledit support (1).

5. Support selon la revendication 4, **caractérisé par le fait que** le guide ou guidage du second élément de retenue (4) est un système de montage pivotant (3).

6. Support selon la revendication 4, **caractérisé par le fait que** les deux éléments de retenue (4, 6) sont dotés d'un système d'accouplement répercutant un mouvement de l'un (4) desdits éléments de retenue sur l'autre élément de retenue (6), de sorte que les deux éléments de retenue (4, 6) se meuvent, conjointement, vers les positions d'appui et/ou de base.

7. Support selon la revendication 1, **caractérisé par le fait que** ledit support (1) présente une commande à glissière (17) affectée à la pièce coulissante (8), qui éloigne ladite pièce coulissante (8) de la partie d'embase (7) lors du pivotement vers la position d'appui, et/ou la déplace vers ladite partie d'embase (7) lors du pivotement vers la position de base.

8. Support selon la revendication 5, **caractérisé par le fait que** les systèmes de montage pivotant (3, 9) des deux éléments de retenue (4, 6) se trouvent du même côté d'un conteneur pour boissons placé dans ledit support (1).

9. Support selon la revendication 4, **caractérisé par le fait que** le second élément de retenue est un couvercle (4) recouvrant ledit support (1) dans la position de base.

10. Support selon la revendication 5, **caractérisé par le fait que** le second élément de retenue (4) présente, entre les positions de base et d'appui, au moins une position intermédiaire dans laquelle il peut être bloqué à demeure ou se maintient de lui-même, et dans laquelle une distance intérieure, séparant les deux éléments de retenue (4, 6) et destinée à un conteneur pour boissons placé dans ledit support (1), est plus petite que dans la position d'appui du second élément de retenue (4).
